# EUROPEAN PATENT SPECIFICATION

(11) **EP 3 476 532 B1**
(45) Date of publication and mention of the grant of the patent: **19.08.2020**
(21) Application number: 18197847.9
(22) Date of filing: 01.10.2018
(51) Int. Cl.: B23Q 3/08, B25B 11/00

(54) **MACHINE TOOL WITH A SYSTEM FOR STOPPING WORKPIECES TO BE MACHINED WHICH IS PROVIDED WITH AN IMPROVED ELECTRIC POWER SYSTEM**
WERKZEUGMASCHINE MIT EINEM SYSTEM ZUM HALTEN VON ZU BEARBEITENDEN WERKSTÜCKEN, DAS IST MIT EINEM VERBESSERTEN ELEKTRISCHEN STROMSYSTEM AUSGESTATTET IST.
MACHINE-OUTIL AVEC SYSTEM POUR ARRETER DES PIECES A USINER EQUIPE D'UN SYSTEME D'ENERGIE ELECTRIQUE AMELIORE

(30) Priority: 31.10.2017 IT 201700123766
(43) Date of publication of application: 01.05.2019
(73) Proprietor: SCM Group S.p.A., 47921 Rimini (RN) (IT)
(72) Inventor: GALLO, Gianluca, 47921 Rimini (IT)
(74) Representative: Santi, Filippo

(56) References cited:
- DE-C1- 10 124 315
- US-A- 5 048 804

## Description

This invention relates to a machine tool with a system for stopping workpieces to be machined which is provided with an improved electric power system. A machine tool according to the preamble of appended claim 1 is known from US 5,048,804.

More in detail, the invention relates to a machine tool with a system for stopping the wooden panel on the work surface of the machine itself, wherein the stopping system is provided with an improved electric power system.

The description below relates to a machine tool for machining wooden panels, but it is quite apparent how the same should not be considered limited to this specific use, as it may also be advantageously applied in the machining of workpieces of different shape and/or type.

Normally, the work surfaces with which the machine tools for machining wooden panels are equipped are supported by a metal support structure, in which is made a multitude of vertical through holes for the passage of air distributed substantially over the entire surface of the work surface and each equipped with a respective valve with a valve which can be opened and closed manually by means of a screwdriver.

Grooves are formed on the upper part of the above-mentioned support surface, normally formed in the shape of a grid, in such a way that the vertical through holes are located between the various holes.

The grooves allow the positioning of linear seals inside them, to form, in this way, on the upper part of the support surface, one or more areas, that is to say, compartments, which are independent, into each of which leads one or more vertical through holes.

Above the support surface is normally rested a support panel, on which is rested, in turn, the panel to be machined.

The above-mentioned support panel normally consists of a breathable material (e.g. cork), so that it can be passed through by a flow of air.

The above-mentioned vertical through holes are also connected to a vacuum pump configured for creating a vacuum condition beneath the panels to be machined when the valves of said holes are in an open position, in such a way that both the panels to be machined and the support panel are attracted, strongly and stably, towards the supporting surface until they are completely fastened.

More specifically, when the vacuum pump is operated, a negative pressure is created in the compartments defined by the above-mentioned seals into which lead holes with the respective valve open, in such a way that the compartments in fact become fastening areas for the overlying portions of the panel to be machined.

The subdivision of the top area of the support surface into subareas, that is to say, into independent compartments, is necessary to allow the stopping of the workpieces obtained after cutting of the panels, on the work surface.

As mentioned above with reference to traditional machine tools, in order to open and close the valves associated with the through holes made in the work surface, it is necessary to intervene manually on them, if necessary with the use of a screwdriver or other tool or operating instrument.

For this reason, if, after the variation of the work programme on the machine tool, it is necessary to modify the configuration or the distribution of the active compartments, that is, of the compartments with a negative pressure, it is inevitably necessary to remove, preliminarily, the support panel positioned above the support panel in order to then be able to intervene on the valves from above, turning, in one direction or the other, for example using a screwdriver, the screws of the opening and closing mechanism of the valves.

In light of the above, the aim of the invention is therefore to provide a machine tool with a system for stopping workpieces to be machined which allows the stopping of the workpieces to be machined to be controlled automatically.

Another aim of the invention is to provide a machine tool with a system for stopping workpieces to be machined which is provided with an improved electric power system wherein the electric power system is efficient and particularly economical.

A further aim of the invention is to provide a machine tool with a system for stopping workpieces to be machined which is provided with an improved electric power system wherein the electric power system is designed for stopping various types of stopping systems.

Another aim of the invention is to provide a machine tool with a system for stopping workpieces to be machined which is provided with an improved electric power system wherein the electric power system has particularly reduced dimensions.

The specific object of this invention is therefore a machine tool for machining workpieces, preferably wooden panels, said machine tool comprising a system for stopping workpieces to be machined: a system for stopping workpieces to be machined, comprising: a support for supporting at least one workpiece to be machined, in said support being formed a plurality of openings communicating with at least one chamber provided beneath the support; a system for generating a negative pressure connected to said at least one chamber for generating a negative pressure in said at least one chamber; a plurality of valves, wherein each valve of said plurality of valves is associated with a respective opening and is movable between an opening position, wherein said opening is left at least partially open by said valve in such a way as to allow, in use, the propagation of the negative pressure from said at least one chamber through said opening and the stopping of said at least one workpiece to be machined by attraction towards said support, and a closed position wherein said valve closes said opening; wherein each valve of said plurality of valves is configured for moving from said open position to said closed position or vice versa when it is powered with a difference of potential which is greater than or equal to a predetermined threshold value; and an electric power system for electrically powering said plurality of valves, said electric power system comprising a voltage generator, at least a first electrical line connected to said voltage generator and a plurality of second electrical lines connected to said voltage generator, wherein each valve of said plurality of valves is connected electrically to said at least a first electrical line and to an electrical line of said plurality of second electrical lines, in such a way that when a predetermined first potential is supplied to said at least a first electrical line and a predetermined second potential is supplied to an electrical line of said plurality of second electrical lines connected to a predetermined valve, said predetermined valve moves from said closed position to said open position or vice versa; the difference between said predetermined first potential and said predetermined second potential being greater than or equal to said predetermined threshold value.

Preferably, according to the invention, said at least a first electrical line comprises a plurality of first electrical lines.

Advantageously, according to the invention, said plurality of valves can be bistable.

Further, according to the invention, said voltage generator can be configured for generating voltage pulses.

Again, according to the invention, said plurality of valves can be positioned beneath said support, in such a way that, in use, said support is positioned between said at least one workpiece to be machined and said plurality of valves.

Preferably, according to the invention, said plurality of valves comprises at least one shutter comprising a cylinder and a piston movable with respect to said cylinder.

Further, according to the invention, the openings of said plurality of openings can be formed in said support in mutually parallel rows.

The invention is now described, by way of example and without limiting the scope of the invention, with reference to the accompanying drawings which illustrate preferred embodiments of it, in which:

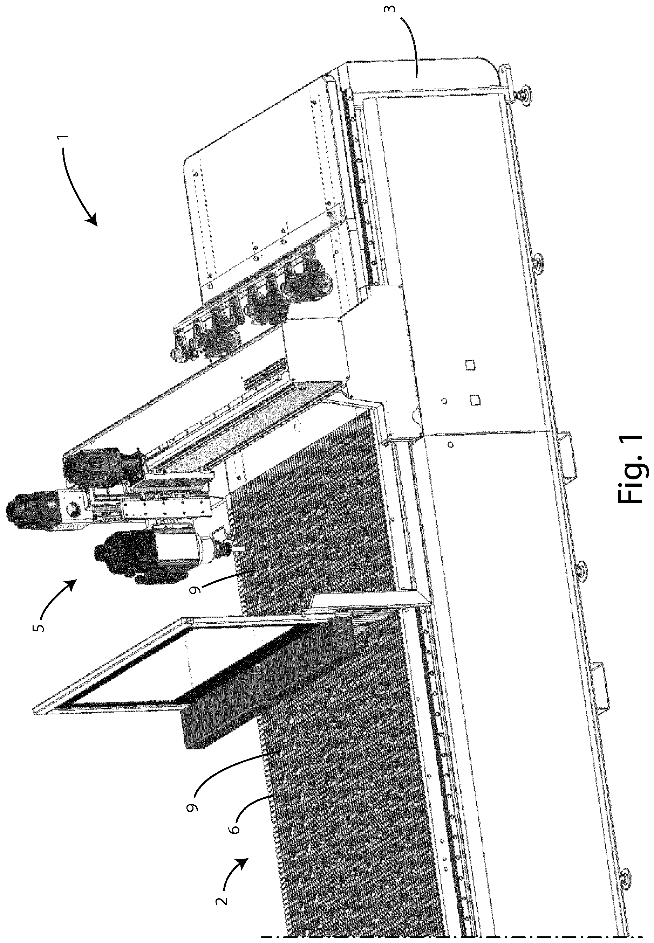

Figure 1 is a partial perspective view of a machine tool with an electric power system for a system for stopping workpieces to be machined according to the invention;

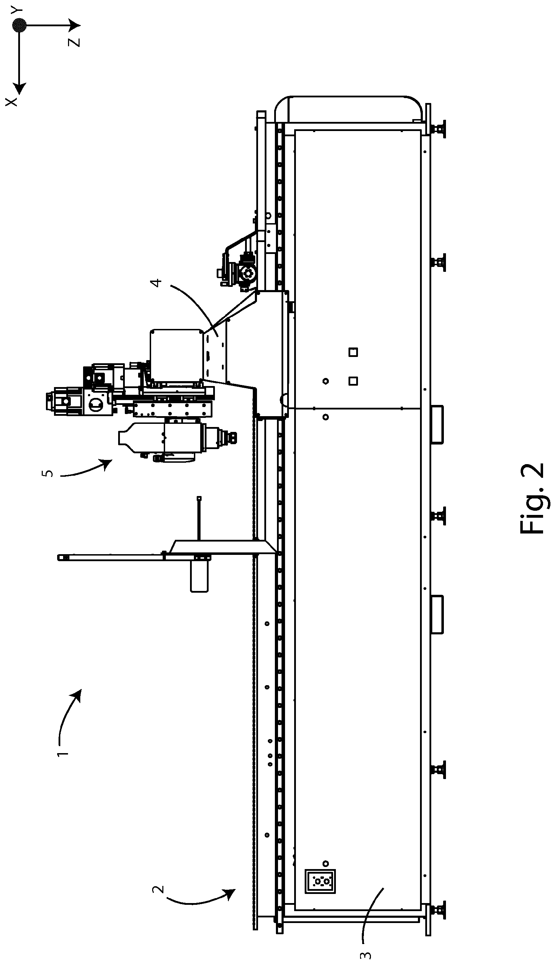

Figure 2 is a side view of the machine tool shown in Figure 1;

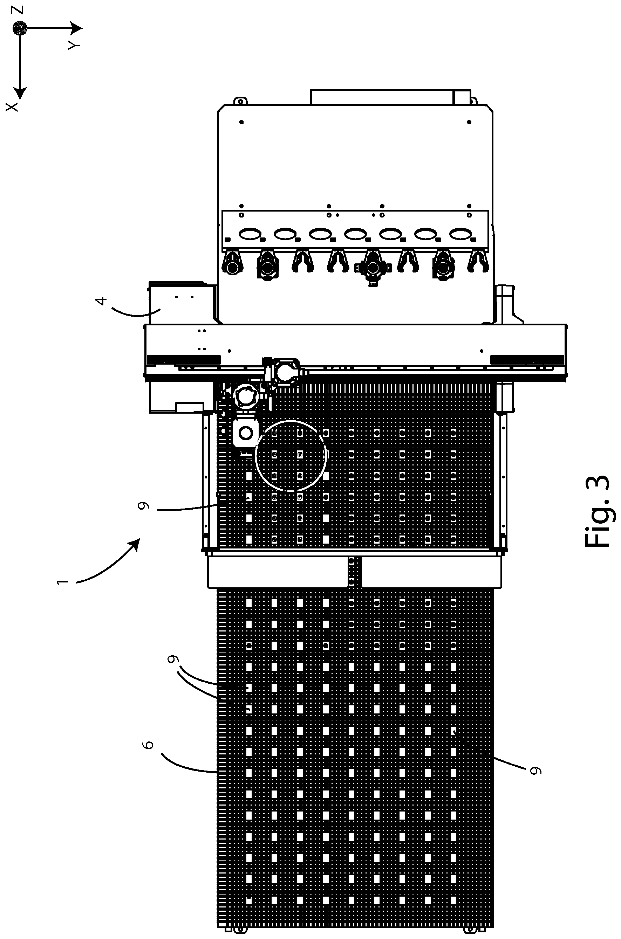

Figure 3 is a top plan view of the machine tool shown in Figure 1;
Figure 4 is a cross section view of a movable component of the above-mentioned stopping system, in a lowered position, powered by the electric power system;
Figure 5 is a cross section view of the component shown in Figure 4, in a raised position; and
Figure 6 shows an operational diagram of the power system of the machine tool according to the invention.

In the various figures similar parts are labelled with the same reference numerals.

With reference to the accompanying drawings, the numeral 1 denotes a machine tool for machining wooden panels.

The machine tool 1 comprises a work surface 2 supported by a base 3.

Above the work surface 2 there is, in a transversal position with respect to the latter, a portal 4 movable along the axis X, on which is enables to move, along the axes Y and Z, an operative head 5 for machining panels.

The work surface 2 in turn comprises a metal support 6, preferably made of aluminium, with a substantially flat form, on which to rest the panels to be machined.

On the upper face of the support 6 is made a plurality of grooves 7 formed in the shape of a grid, so as to form a plurality di raised areas 8 uniformly distributed and separated from each other by the grooves 7.

The above-mentioned support 6 may be, for example, formed by a metal sheet which in turn consists, if necessary, of a series of longitudinal elements placed alongside each other and joined together.

A plurality of through holes 9, which are uniformly distributed in rows which are substantially parallel to each other, is also formed in the support 6.

Beneath each through hole 9 there is a valve, or rather a shutter, 10 which can be actuated electrically by an electric power system connected to the control system of the machine tool 1.

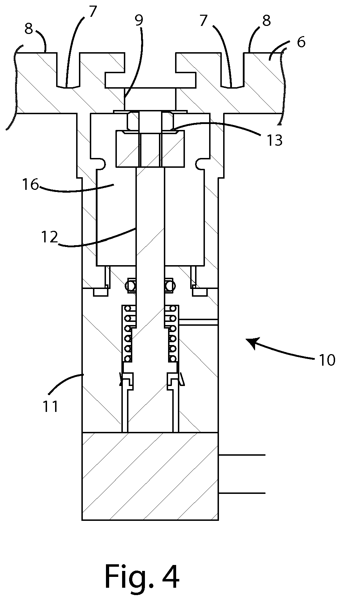

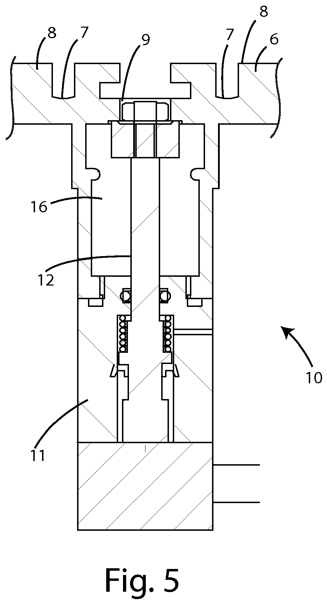

More specifically, the shutter 10 is of the type comprising a cylinder 11 and a 12 movable vertically so as to open or close, from below, the relative through hole 9, as shown, respectively, in Figures 4 and 5.

In the upper part of the piston 12 there is also a seal 13 to guarantee the seal with the through hole 9 when the piston 12 is in the raised closing position (see Figure 5).

The above-mentioned electric power system comprises a voltage generator 14, a first plurality of electric lines 15a₁, 15a₂, ..., 15aₙ connected to the voltage generator 14 and a second plurality of electric lines 15b₁, 15b₂, ..., 15bₙ also connected to said voltage generator 14, wherein each electric line is formed by one or more electrical cables.

More specifically, the voltage generator 14 may comprise a voltage generation unit (such as one or more batteries or one of more power supply units) for supplying predetermined voltages to the first plurality of electric lines 15a₁, 15a₂, ..., 15aₙ and the second plurality of electric lines 15b₁, 15b₂, ..., 15bₙ, a system of switches operatively positioned between said voltage generation unit and said plurality of electric lines 15a₁, 15a₂, ...,15aₙ, 15b₁, 15b₂, ..., 15bₙ, for enabling or disabling said supply of said predetermined voltages, and a control unit for controlling the operation of the system of switches according to opportune control logics.

The above-mentioned voltage generator 14 may therefore be made in an integrated fashion, that is to say, by means of a single device, or in a distributed fashion, that is to say, by means of several devices connected together.

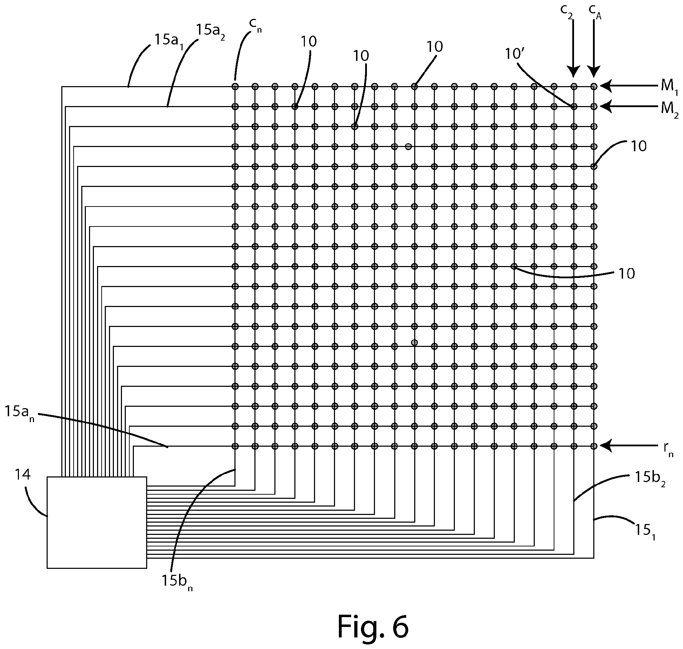

The first plurality of electric lines 15a₁, 15a₂, ..., 15aₙ and the second plurality of electric lines 15b₁, 15b₂, ..., 15bₙ are also connected to the shutters 10, to allow the operation, in such a way that each electric line of said first plurality of electric lines 15a₁, 15a₂, ..., 15aₙ is connected to the shutters 10 of a horizontal row r₁, r₂, ..., rₙ, that is to say, a line, of shutters 10 and each electric line of said second plurality of electric lines 15b₁, 15b₂, ..., 15bₙ is connected to the shutters 10 of a vertical row c₁, c₂, ..., cₙ, that is to say, a column, of shutters 10 as shown schematically in Figure 6.

As indicated above, Figure 6 is merely a schematic representation of the electric power system according to the invention and, therefore, it should be understood that the shutters 10 can be distributed according to a multitude of spatial configurations.

More specifically, the voltage generator 14 is configured for generating voltage pulses, that is to say, differences of potential +V/-V at the ends of the electric lines of the first plurality of electric lines 15a₁, 15a₂, ..., 15aₙ and of the second plurality of electric lines 15b₁, 15b₂, ..., 15bₙ, in such a way that when a difference of potential +V/-V is generated between the ends of a predetermined first electric line 15a₂ of the first plurality of electric lines 15a₁, 15a₂, ..., 15aₙ and of a predetermined second electric line 15b₂ of the second plurality of electric lines 15b₁, 15b₂, ..., 15bₙ, only the shutter 10' connected to said predetermined first electric line 15a₂ and to predetermined second electric line 15b₂ is powered with a difference of potential having a value equal to +V-(-V), that is, 2V, and the other shutters 10 of the same line and of the same column to which the above-mentioned shutter 10' also belongs are powered, on the other hand, with a difference of potential having a value equal to V.

Moreover, each shutter 10 is of the bistable type and is configured in such a way as to change the status, changing from the raised position shown in Figure 5, wherein the overlying through hole 9 is closed by the shutter 10, to the lowered position shown in Figure 4, wherein the same through hole 9 is left open, or vice versa, each time that it receives a voltage pulse from the voltage generator 14, that is to say, a difference of potential having a value equal to or greater than a predetermined threshold value, such, as, for example, 2V.

Differences of potentiate of a value less than 2V are not, on the other hand, sufficient to change the status of the shutters 10.

Beneath the support 6 there is also at least one vacuum chamber 16 communicating with the above-mentioned through holes 9 and connected to a vacuum generating system, in such a way that when the latter is in operation and at least one shutter 10 is in the lowered position so as to leave open the overlying through hole 9, the vacuum, that is, the negative pressure generated by it, propagates above the support 6 through the through holes 9 left open by the relative shutters 10.

According to a possible embodiment of the invention, the through holes 9 are made in the support 6 according to a matrix distribution, that is, composed of a series of rows alongside each other, whilst beneath the support 6 there are a series of longitudinal independent vacuum chambers 16 positioned one alongside the other in such a way that a longitudinal row of through holes 9 leads into each of these.

In order to stop the panels to be machined on the work surface 2, it is necessary, firstly, to position one or more seals (not illustrated) in the grooves 7 of the support 6 about one or more through holes 9, in such a way that on the upper face of the support 6 are defined one or more isolated areas, delimited on the perimeter by the above-mentioned seals, on the basis of the work programme selected in the machine tool 1.

Subsequently, it is necessary to position on the support 6, in sequence, a support panel (not illustrated) and a panel to be machined (not illustrated), in such a way that said support panel is positioned between the latter and the support 6 and that a plurality of upper chambers is formed in the areas delimited by the above-mentioned seals.

After carrying out these preliminary operations, it is possible to activate the above-mentioned vacuum generating system which, once in operation, will generate a vacuum condition, that is, a negative pressure, in the vacuum chamber 16.

At this point, in order to command the lowering of the above-mentioned shutter 10' and therefore the opening of the relative through hole 9 and allow, in this way, the propagation of the vacuum from the vacuum chamber 16 to the upper chamber into which the through hole 9 leads, it is necessary to generate, by the voltage generator 14, a difference of potential of +V/-V at the ends of the above-mentioned first electric line 15a₂ and of the above-mentioned second electric line 15b₂ which intercept, together, the shutter 10'.

In fact, in this way, only the shutter 10' is powered with a difference of potential with the value equal to 2V and can, consequently, change the status from the relative closed position to the open position.

Otherwise, the other shutters 10 of the same line r₂ and of the same column c₂ to which the shutter 10' also belongs, since they are powered with a difference of potential with a value equal to V, cannot change status, in the same was as all the other shutters 10 which make up the matrix of Figure 6, which are not powered at all.

With the opening of the through hole 9 overlying the above-mentioned shutter 10', the vacuum present in the vacuum chamber 16 propagates into the upper chamber into which the through hole 9 leads, determining, in this way, the stopping by attraction, on the work surface 2, of the portion of panel to be machined positioned above the upper chamber with the negative pressure.

In order, however, to set up a different stopping zone of the panel on the work surface 2, it is necessary to command the lifting of the shutter 10' up to the relative closing position applying again a difference of potential +V/-V at the ends of the above-mentioned first electric line 15a₂ and second electric line 15b₂, and command the lowering of another shutter 10 applying a difference of potential +V/-V at the ends of another two electric lines belonging, respectively, to the first plurality of electric lines 15a₁, 15a₂, ..., 15aₙ and to the second plurality of electric lines 15b₁, 15b₂, ..., 15bₙ.

As may be inferred from the above description, the power system described above allows each shutter 10 to be controlled with a very small number of electric lines.

This results in considerable advantages both in economic terms and from the point of view of the overall dimensions of the electrical material necessary for operation of the shutters 10.

Clearly, these advantages will be even greater the larger the number of shutters 10 to be controlled.

This invention is described by way of example only, without limiting the scope of application, according to its preferred embodiments, but it shall be understood that the invention may be modified and/or adapted by experts in the field without thereby departing from the scope of the inventive concept, as defined in the claims herein.

## Claims

1. Machine tool (1) for machining workpieces, preferably wood panels, said machine tool (1) comprising a system for stopping workpieces to be machined comprising:
a support (6) for supporting at least one workpiece to be machined, in said support (6) there being formed a plurality of openings (9) which are in communication with at least one chamber (16) which is provided under said support (6);
a depression generation system which is connected with said at least one chamber (16) to generate a depression in said at least one chamber (16);
a plurality of valves (10), where each valve (10) of said plurality of valves (10) is associated with a respective opening (9) and is movable between an opening position, where said opening (9) is kept at least partially open by said valve (10) such as to allow, when in use, the depression to propagate from said at least one chamber (16) through said opening (9) and stopping said at least one workpiece to be machined by attraction to said support (6), and a closing position where said valve (10) closes said opening (9);
**characterised in that**
each valve of said plurality of valves (10) is configured to move from said opening position to said closing position or vice versa when said each valve is powered by a potential difference which is equal to or higher than a set threshold value; and
an electric power system for electrically powering said plurality of valves (10), said electric power system comprising a tension generator (14), at least one first electric line (15a₁, 15a₂, ..., 15aₙ) which is connected with said tension generator (14) and a plurality of second electric lines (15b₁, 15b₂, ..., 15bₙ) which are connected with said tension generator (14), wherein each valve of said plurality of valves (10) is electrically connected with said at least one first electric line (15a₁, 15a₂, ..., 15aₙ) and a electric line of said plurality of second electric lines (15b₁, 15b₂, ..., 15bₙ), such that when a set first potential is provided to said at least one first electric line (15a₁, 15a₂, ..., 15aₙ) and a set second potential is provided to an electric line of said plurality of second electric lines (15b₁, 15b₂, ..., 15bₙ), said at least one first electric line (15a₁, 15a₂, ..., 15aₙ) and said electric line of said plurality of second electric lines (15b₁, 15b₂, ..., 15bₙ) being connected with a set valve (10'), said set valve (10') moves from said closing position to said opening position or vice versa; the difference between said set first potential and said set second potential being equal to or higher than said set threshold value.

2. Machine tool (1) according to claim 1, **characterized in that** said at least one first electric line comprises a plurality of first electric lines (15a₁, 15a₂, ..., 15aₙ).

3. Machine tool (1) according to claim 1 or 2, **characterized in that** said plurality of valves (10) are bistable.

4. Machine tool (1) according to any one of preceding claims, **characterized in that** said tension generator (14) is configured to generate tension pulses.

5. Machine tool (1) according to any one of preceding claims, **characterized in that** said plurality of valves (10) is placed under said support (6) such that, when in use, said support (6) is placed between said at least one workpiece to be machined and said plurality of valves (10).

6. Machine tool (1) according to any one of preceding claims, **characterized in that** said plurality of valves comprises at least one plugger (10) comprising a cylinder (11) and a piston (12) movable relative to said cylinder (11).

7. Machine tool (1) according to any one of preceding claims, **characterized in that** the openings of said plurality of openings (9) are formed in said support (6) in rows which are parallel to one another.

## Patentansprüche

1. Werkzeugmaschine (1) zur Bearbeitung von Werkstücken, vorzugsweise Holzplatten, wobei die Werkzeugmaschine (1) ein System zum Festspannen der zu bearbeitenden Werkstücke beinhaltet, das Folgendes umfasst:
eine Auflage (6) zum Auflegen zumindest eines zu bearbeitenden Werkstücks, wobei in dieser Auflage (6) eine Vielzahl von Öffnungen (9) ausgebildet sind, die mit zumindest einer Kammer (16) in Verbindung stehen, die unterhalb der Auflage (6) vorgesehen ist;
ein Unterdruckerzeugungssystem, das mit der zumindest einen Kammer (16) verbunden ist, um einen Unterdruck in der zumindest einen Kammer (16) zu erzeugen;
eine Vielzahl von Ventilen (10), wobei jedes Ventil (10) der Vielzahl von Ventilen (10) mit einer entsprechenden Öffnung (9) verbunden ist und beweglich ist zwischen einer Öffnungsstellung, in der die Öffnung (9) zumindest teilweise von dem Ventil (10) geöffnet gehalten wird, um, im Gebrauch, zu ermöglichen, dass der Unterdruck sich von der zumindest einen Kammer (16) aus durch die Öffnung (9) ausbreiten kann, um das zumindest eine zu bearbeitende Werkstück durch Heranziehen an die Auflage (6) festzuspannen, und einer Schließstellung, in der das Ventil (10) die Öffnung (9) verschließt;
**dadurch gekennzeichnet, dass** jedes Ventil der Vielzahl von Ventilen (10) dafür ausgelegt ist, sich von der Öffnungsstellung in die Schließstellung oder umgekehrt zu bewegen, wenn das betreffende Ventil mit einer Potentialdifferenz gespeist wird die gleich oder höher ist als ein vorbestimmter Schwellenwert; und
ein elektrisches Versorgungssystem für die elektrische Speisung der Vielzahl von Ventilen (10), wobei das elektrische Versorgungssystem umfasst: eine Spannungsquelle (14), zumindest eine erste elektrische Leitung (15a1, 15a2, ..., 15an), die mit der Spannungsquelle (14) verbunden ist, und eine Vielzahl zweiter elektrischer Leitungen (15b1, 15b2, ..., 15bn), die mit der Spannungsquelle (14) verbunden sind, wobei jedes Ventil der Vielzahl von Ventilen (10) derart elektrisch mit der zumindest einen ersten elektrischen Leitung (15a1, 15a2, ..., 15an) und einer elektrischen Leitung der Vielzahl zweiter elektrischer Leitungen (15b1, 15b2, ..., 15bn) verbunden ist, dass, wenn ein vorbestimmtes erstes Potential an der zumindest einen ersten elektrischen Leitung (15a1, 15a2, ..., 15an) bereitgestellt wird und ein vorbestimmtes zweites Potential an einer elektrischen Leitung der Vielzahl zweiter elektrischer Leitungen (15b1, 15b2, ..., 15bn) bereitgestellt wird, wobei die zumindest eine erste elektrische Leitung (15a1, 15a2, ..., 15an) und die elektrische Leitung der Vielzahl zweiter elektrischer Leitungen (15b1, 15b2, ..., 15bn) mit einem vorbestimmten Ventil (10') verbunden sind, dieses vorbestimmte Ventil (10') von der Schließstellung in die Öffnungsstellung bewegt wird oder umgekehrt; wobei die Differenz zwischen dem vorbestimmten ersten Potential und dem vorbestimmten zweiten Potential gleich oder höher ist als der vorbestimmte Schwellenwert.

2. Werkzeugmaschine (1) nach Anspruch 1, **dadurch gekennzeichnet, dass** die zumindest eine erste elektrische Leitung eine Vielzahl erster elektrischer Leitungen (15a1, 15a2, ..., 15an) umfasst.

3. Werkzeugmaschine (1) nach Anspruch 1 oder 2, **dadurch gekennzeichnet, dass** die Vielzahl von Ventilen (10) bistabile Ventile sind.

4. Werkzeugmaschine (1) nach einem der vorhergehenden Ansprüche, **dadurch gekennzeichnet, dass** die Spannungsquelle (14) dafür ausgelegt ist, Spannungsimpulse zu erzeugen.

5. Werkzeugmaschine (1) nach einem der vorhergehenden Ansprüche, **dadurch gekennzeichnet, dass** die Vielzahl von Ventilen (10) derart unterhalb der Auflage (6) angeordnet ist, dass, im Gebrauch, die Auflage (6) zwischen dem zumindest einen zu bearbeitenden Werkstück und der Vielzahl von Ventilen (10) angeordnet ist.

6. Werkzeugmaschine (1) nach einem der vorhergehenden Ansprüche, **dadurch gekennzeichnet, dass** die Vielzahl von Ventilen zumindest ein Sitzventil (10) beinhaltet, das einen Zylinder (11) und einen Kolben (12) umfasst, der relativ zu dem Zylinder (11) beweglich ist.

7. Werkzeugmaschine (1) nach einem der vorhergehenden Ansprüche, **dadurch gekennzeichnet, dass** die Öffnungen der Vielzahl von Öffnungen (9) in der Auflage (6) in zueinander parallelen Reihen ausgebildet sind.

## Revendications

1. Une machine-outil (1) pour usiner des pièces, de préférence des panneaux en bois, ladite machine-outil (1) comprenant un système pour arrêter les pièces à usiner comprenant :
un support (6) pour supporter au moins une pièce à usiner, dans ledit support (6) étant formée une pluralité d'ouvertures (9) qui sont en communication avec au moins une chambre (16) qui est prévue en dessous dudit support (6) ;
un système de génération de dépression qui est relié à ladite au moins une chambre (16) pour générer une dépression dans ladite au moins une chambre (16) ;
une pluralité de vannes (10), où chaque vanne (10) de ladite pluralité de vannes (10) est associée à une ouverture (9) respective et est mobile entre une position d'ouverture, dans laquelle ladite ouverture (9) est maintenue au moins partiellement ouverte par ladite vanne (10) de manière à permettre, lors de l'utilisation, à la dépression de se propager à partir de ladite au moins une chambre (16) à travers ladite ouverture (9) et d'arrêter ladite au moins une pièce à usiner par attraction audit support (6), et une position de fermeture dans laquelle ladite vanne (10) ferme ladite ouverture (9) ;
**caractérisée en ce que** chaque vanne de ladite pluralité de vannes (10) est configurée pour passer de ladite position d'ouverture à ladite position de fermeture ou inversement lorsque ladite chaque vanne est alimentée par une différence de potentiel qui est égale ou supérieure à une valeur de seuil prédéfinie ; et
un système d'alimentation électrique pour alimenter électriquement ladite pluralité de vannes (10), ledit système d'alimentation électrique comprenant un générateur de tension (14), au moins une première ligne électrique (15a1, 15a2, ..., 15an) qui est reliée audit générateur de tension (14) et une pluralité de deuxièmes lignes électriques (15b1, 15b2, ..., 15bn) qui sont reliées audit générateur de tension (14), où chaque vanne de ladite pluralité de vannes (10) est reliée électriquement à ladite au moins une première ligne électrique (15a1, 15a2, ..., 15an) et à une ligne électrique de ladite pluralité de deuxièmes lignes électriques (15b1, 15b2, ..., 15bn), de sorte que, lorsqu'un premier potentiel prédéfini est fourni à ladite au moins une première ligne électrique (15a1, 15a2, ..., 15an) et qu'un deuxième potentiel prédéfini est fourni à une ligne électrique de ladite pluralité de deuxièmes lignes électriques (15b1, 15b2, ..., 15bn), ladite au moins une première ligne électrique (15a1, 15a2, ..., 15an) et ladite ligne électrique de ladite pluralité de deuxièmes lignes électriques (15b1, 15b2, ..., 15bn) étant reliées à une vanne prédéfinie (10'), ladite vanne prédéfinie (10') passe de ladite position de fermeture à ladite position d'ouverture ou inversement ; la différence entre ledit premier potentiel prédéfini et ledit deuxième potentiel prédéfini étant égale ou supérieure à ladite valeur de seuil prédéfinie.

2. La machine-outil (1) selon la revendication 1, **caractérisée en ce que** ladite au moins une première ligne électrique comprend une pluralité de premières lignes électriques (15a1, 15a2, ..., 15an).

3. La machine-outil (1) selon la revendication 1 ou 2, **caractérisée en ce que** ladite pluralité de vannes (10) sont bistables.

4. La machine-outil (1) selon l'une quelconque des revendications précédentes, **caractérisée en ce que** ledit générateur de tension (14) est configuré pour générer des impulsions de tension.

5. La machine-outil (1) selon l'une quelconque des revendications précédentes, **caractérisée en ce que** ladite pluralité de vannes (10) est placée sous ledit support (6) de manière à ce que, lors de l'utilisation, ledit support (6) soit placé entre ladite au moins une pièce à usiner et ladite pluralité de vannes (10).

6. La machine-outil (1) selon l'une quelconque des revendications précédentes, **caractérisée en ce que** ladite pluralité de vannes comprend au moins un obturateur (10) comprenant un cylindre (11) et un piston (12) mobile par rapport audit cylindre (11).

7. La machine-outil (1) selon l'une quelconque des revendications précédentes, **caractérisée en ce que** les ouvertures de ladite pluralité d'ouvertures (9) sont formées dans ledit support (6) en rangées qui sont parallèles les unes aux autres.
